# EUROPÄISCHE PATENTSCHRIFT

(11) **EP 1 122 702 B1**
(45) Veröffentlichungstag und Bekanntmachung des Hinweises auf die Patenterteilung: **15.03.2006**
(21) Anmeldenummer: 01101442.0
(22) Anmeldetag: 23.01.2001
(51) Int. Cl.: G08G 1/0967, H04Q 7/38, G08G 1/127

(54) **Verfahren und Einrichtungen zur Ermittlung von Bewegungsdaten einer Mobilstation**
Method and apparatus for determining location data from a mobile station
Procédé et dispositif pour déterminer les données de localisation d'une station mobile

(30) Priorität: 31.01.2000 DE 10004061
(43) Veröffentlichungstag der Anmeldung: 08.08.2001
(73) Patentinhaber: Nokia Corporation, 02150 Espoo (FI)
(72) Erfinder: Tervo, Juha Tuomo, 44791 Bochum (DE); König, Jens, 44787 Bochum (DE); Kunze, Klaus, 44793 Bochum (DE); Karahan, Sedat, 44869 Bochum (DE)
(74) Vertreter: Becker Kurig Straus

(56) Entgegenhaltungen:
- EP-A- 0 600 162
- EP-A- 0 923 256
- WO-A-96/25830
- WO-A-98/54682
- HELLEBRANDT M ET AL: "LOCATION TRACKING OF MOBILES IN CELLULAR RADIO NETWORKS" IEEE TRANSACTIONS ON VEHICULAR TECHNOLOGY, IEEE INC. NEW YORK, US, Bd. 48, Nr. 5, September 1999 (1999-09), Seiten 1558-1562, XP000912525 ISSN: 0018-9545

## Beschreibung

Die Erfindung bezieht sich auf ein Verfahren zum Anfordern von Information mit Hilfe einer zu einem Mobilfunknetz gehörenden Mobilstation, insbesondere von Information, die von Bewegungsdaten der Mobilstation abhängig ist, sowie auf eine Mobilstation zur Durchführung des Verfahrens.

Als Bewegungsdaten werden allgemein die Bewegung einer Mobilstation beschreibende Daten verstanden, also z.B. Daten, die einen von der Mobilstation zurückgelegten Weg beschreiben, oder solche Daten die die Bewegungsrichtung oder die Geschwindigkeit der Mobilstation angeben, und dergleichen. Nachdem solche Bewegungsdaten ermittelt worden sind, läßt sich entweder automatisch oder auf Anfrage gezielt Information zur Mobilstation übertragen, etwa von einem Diensteanbieter. Bei dieser Information kann es sich um Verkehrsinformation aus einer zentralen Datenbank handeln, z.B. um Information von Einrichtungen entlang einer Strecke, etwa um Information über Tankstellen, Hotels, Restaurants oder Sehenswürdigkeiten, usw. Möglich ist es aber auch, anhand der Bewegungsdaten z.B. den Einsatz von Rettungskräften zu koordinieren, die mit Mobilstationen ausgestattet sind.

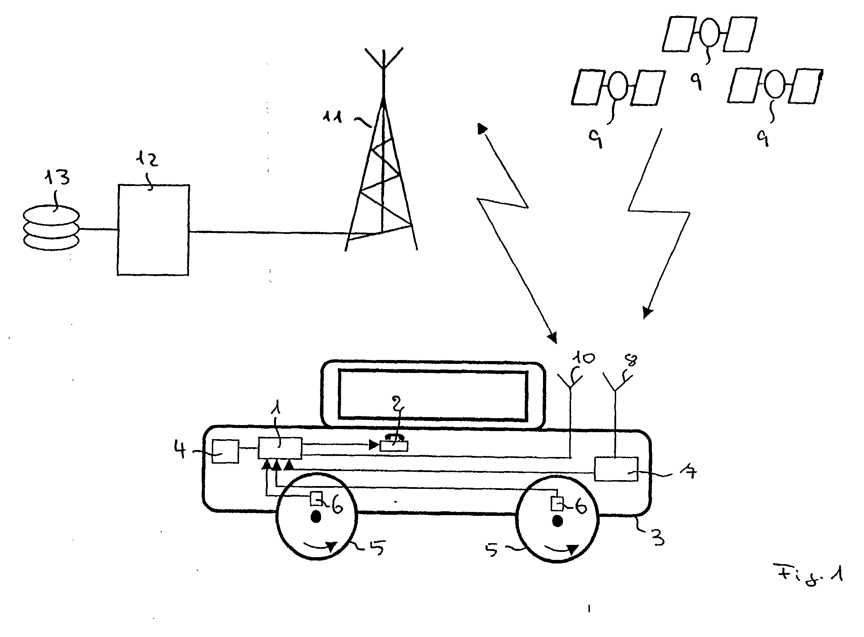

Allgemein bekannt ist die Ermittlung von Bewegungsdaten der genannten Art unter Verwendung von Navigationssystemen, wie dies in Figur 1 gezeigt ist. Eine Mobilstation 1 in Form eines Autotelefons mit Hörerablage 2 ist hier in einem Kraftfahrzeug 3 installiert. Mit der Mobilstation 1 sind ferner ein Richtungssensor 4 bzw. Gyrometer, mit den Rädern 5 des Kraftfahrzeugs 3 zusammenarbeitende Radsensoren 6 sowie ein im Kraftfahrzeug 3 installierter GPS-Satellitenempfänger 7 verbunden. Der Satellitenempfänger 7 empfängt über seine Antenne 8 von GPS-Satelliten 9 abgestrahlte Positionssignale und ist in der Lage anhand dieser Positionssignale seine geographischen Koordinaten auf der Erde zu ermitteln und sie der Mobilstation 1 zuzuleiten. Die Mobilstation 1 kann dann über ihre Antenne 10 und eine Basisstation 11 in Kontakt mit einem Diensteanbieter 12 treten, um auf die Bewegungsdaten des Kraftfahrzeugs 3 bezogene Information von diesem aus einer Datenbank 13 zu erhalten.

Nachteilig ist allerdings, daß neben der Mobilstation relativ umfangreiche weitere Einrichtungen wie GPS-Satellitenempfänger, Richtungssensor und Radsensoren erforderlich sind, um überhaupt Bewegungsdaten ermitteln zu können. Hierdurch verteuert sich nicht nur das Kommunikationssystem insgesamt, sondern es wird auch anfälliger gegenüber Störungen.

Aus der WO 98/58459 sind ein Verfahren und eine Einrichtung zur standortbezogenen Information von Mobilfunkteilnehmern bekannt, wobei mindestens eine Informationszentrale vorgesehen ist, mit welcher der Mobilfunkteilnehmer über das Mobilfunknetz kommunizieren kann. Der Mobilfunkteilnehmer kann unter Anwahl einer vorgegebenen Rufnummer eine Kommunikationsverbindung mit der Informationszentrale herstellen, wobei die im Mobilfunknetz vorhandene Standortinformation über die die Mobilstation augenblicklich versorgende Basisstation als Erweiterungsnummer an die vom Mobilfunkteilnehmer gewählte Rufnummer angehängt wird, so daß anhand dieser erweiterten Rufnummer die Verbindung zur Informationszentrale durchgeschaltet wird und diese dem Mobilfunkteilnehmer anhand der Erweiterungsnummer standortbezogene Information übermitteln kann.

Wird allerdings Information nicht für einen bestimmten Umkreis gewünscht sondern solche, die fahrtrichtungsbezogen ist, so müssen eine Fahrtrichtung eingegeben bzw. ein Fahrziel definiert werden.

Aus der WO 98/54682 A1 ist ein System zum Liefern von reiserelevanter Information zu einem Fahrzeug bekannt, bei dem die Position des Fahrzeugs ohne fahrzeugseitige Mitwirkung (passively) aus dem Funkverkehr eines im Fahrzeug befindlichen Mobiltelefons festgestellt wird, bei dem reiserelevante Information aus einer Datenbank unter Verwendung der Position des Fahrzeugs ausgewählt wird, und bei dem die kundenbezogene Reiseinformation zum mobilen Empfänger übertragen wird.

Die Erfassung von die Position des Fahrzeugs bzw. des Teilnehmers wieder-gebenden Daten erfolgt dabei ausschließlich zentral mit Hilfe eines "geolocator".

Aus dem Aufsatz von M. Hellebrandt und R. Mathar; "Location Tracking of Mobiles in Cellular Radio Networks",) ist es bekannt, neben den Positionsdaten der einzelnen Basisstationen auch Laufzeit und Feldstärkemessungen für verschiedene Basisstationen durchzuführen, um die Position von Mobilstationen nachverfolgen zu können, um auf der Grundlage der Bewegungen der einzelnen Mobilstationen den Betrieb eines Mobilfunknetzes zu verbessern.

Aus der EP 0 923 256 A2 ist ein Verfahren zum Erfasssen der Position einer zu einem Mobilfunknetz gehörenden Mobilstation bekannt, bei dem für mehrere zum Mobilfunknetz gehörende Basisstationen, die die Mobilstation bei ihrer Bewegung der Reihe nach versorgen, wenigstens die zu den Basisstationen gehörenden Standortinformationen, insbesondere Zellkennungen in einem Speicher der Mobilstation gespeichert werden, um mehrere zu aufeinanderfolgenden Zeitpunkten festgestellte Zellkennungen zusammenfassen und gemeinsam übermitteln zu können; bei dem eine Folge von gespeicherten Standortinformationen regelmäßig zu bestimmten Zeiten und/oder in bestimmten Intervallen zu einer Zentralstation, nämlich einer Positionserfassungszentrale übertragen werden; und bei dem aus den übertragenen Standortinformationen Bewegungsdaten der Mobilstation abgeleitet werden. Dieses Verfahren ist auch für positionsbezogene Dienste nutzbar.

Der Erfindung liegt die Aufgabe zugrunde, ein weiteres Verfahren und eine weitere Mobilstation anzugeben, das bzw. die eine einfachere Ermittlung von Bewegungsdaten einer Mobilstation ermöglicht, die zum Anfordern von Information benötigten werden.

Die verfahrensseitige Lösung der gestellten Aufgabe ist in den Ansprüchen 1 und 2 angegeben Vorteilhafte Weiterbildungen der Erfindung sind den jeweils nachgeordneten Unteransprüchen zu entnehmen.

Beim erfindungsgemäßen Verfahren zum Anfordern von Information mit Hilfe einer zu einem Mobilfunknetz gehörenden Mobilstation werden für mehrere zum Mobilfunknetz gehörende Basisstationen, die die Mobilstation bei ihrer Bewegung der Reihe nach versorgen, wenigstens die zu den Basisstationen gehörenden Standortinformationen in einem Speicher der Mobilstation gespeichert, eine Folge von gespeicherten Standortinformationen nur bei Bedarf, also nur dann wenn ein Benutzer für ihn relevante Information bei einem Diensteanbieter anfordert, zu einer Zentralstation übertragen; aus den übertragenen Standortinformationen Bewegungsdaten der Mobilstation abgeleitet; und von den ermittelten Bewegungsdaten abhängige Informationen zur Mobilstation übertragen. Dabei ist es erfindungsgemäß jedoch auch möglich zunächst Bewegungsdaten aus einer Folge von gespeicherten Standortinformationen abzuleiten, um die Bewegungsdaten bei Bedarf zu einer Zentralstation zu übertragen.

Um Bewegungsdaten einer Mobilstation zu ermitteln, anhand derer relevante Information aus einer Datenbank einer Zentralstation ausgesucht und zur Mobilstation übertragen werden, braucht somit kein aufwendiges GPS-System mehr verwendet zu werden, sondern sie lassen sich unmittelbar unter Verwendung von Komponenten des erdgestützen Mobilfunknetzes bestimmen, etwa beim Serviceprovider oder in der Mobilstation selbst. Dies vereinfacht und verbilligt das Kommunikationssystem erheblich.

Dabei können nach einer Ausgestaltung der Erfindung als Standortinformationen die Kennnummern der zu den jeweiligen Basisstationen gehörenden Funkzellen gespeichert werden oder die geographischen Koordinaten der jeweiligen Basisstationen. Bei einer Kommunikation der Mobilstation mit den jeweiligen Basisstationen sind dem Mobilfunknetz die Kennnummern bzw. geographischen Koordinaten der die Mobilstation gerade versorgenden Basisstation immer bekannt, so daß in einfacher Weise eine derartige Folge von Kennnummern bzw. geographischer Koordinaten zur Ermittlung der Bewegungsdaten zwischengespeichert werden kann.

So kann z.B. eine gespeicherte Folge von Standortinformationen, gegebenfalls unter Heranziehung einer Empfangsfeldstärke eines zwischen Mobilsstation und jeweiliger Basisstation gesendeten Signals, zur Ermittlung von Bewegungsdaten darstellenden Koordinaten einer Straße verwendet werden. Sollte eine höhere Genauigkeit der ermittelten Koordinaten der Straße gewünscht sein, könnte gegebenenfalls zusätzlich ein sogenanntes "Map Matching Verfahren" zum Einsatz kommen, bei dem die zunächst ermittelten Straßenkoordinaten mit in elektronischer Form vorhandenem Kartenmaterial abgeglichen werden. Auch könnten Laufzeitmessungen elektrischer Signale zwischen Mobilstation und verschiedenen Basisstationen durchgeführt werden, um zusätzlich bessere Koordinaten der Mobilstation zu erhalten (z.B. ließe sich ein sog. Timing-Advance-Verfahren einsetzen).

Als Bewegungsdaten können aber auch aus der gespeicherten Folge von Standortinformationen, wiederum gegebenenfalls unter Heranziehung einer Empfangsfeldstärke eines zwischen Mobilstation und Basisstation gesendeten Signals, eine Bewegungsrichtung der Mobilstation ermittelt werden. Hierzu werden lediglich die den Standortinformationen zugeordneten Funkzellen lagemäßig erfaßt, und es wird aus dem geographischen Verlauf der sich aneinander anschließenden Funkzellen auf die zukünftige Bewegungsrichtung der Mobilstation geschlossen. Dies kann z.B. dadurch geschehen, daß durch eine Anzahl vorhergehender Verbindungsvektoren zwischen jeweils benachbarten Basisstationen auf einen mittleren Richtungsvektor geschlossen wird.

Als Bewegungsdaten aus der gespeicherten Folge von Standortinformationen und zugehörigen Zeiten, zu denen die Mobilstation von einer jeweiligen Basisstation versorgt wird, kann aber auch eine Geschwindigkeit der Mobilstation ermittelt werden. Anhand dieser Information bzw. Geschwindigkeit läßt sich z.B. bestimmen, ob etwa die Mobilstation in einem auf einer Straße fahrenden Kraftfahrzeug installiert ist, auf welchem Typ von Straße das Kraftfahrzeug gegebenenfalls fährt, oder ob die Mobilstation von einem Benutzer lediglich getragen wird, der durchs Gelände geht. Insofern kann die Information "Geschwindigkeit" auch zu genaueren Positionsbestimmungen in jeweiligen Funkzellen beitragen, so daß sich dadurch Straßentypen eventuell ausschließen bzw. bevorzugt auswählen lassen. Die Information "Geschwindigkeit" kann aber auch Aufschluß über das zeitliche Verhalten eines die Mobilstation mitführenden Benutzers geben, so daß auch in dieser Hinsicht z.B. an eine bessere Koordination von z.B. Rettungskräften gedacht werden kann.

In all den genannten Fällen können die Bewegungsdaten als Auswahlkriterium dafür genommen werden, welche Information z.B. von einem Serviceprovider automatisch oder auf besondere Anfrage zur Mobilstation verschickt werden soll. Diese Information könnte somit aufgrund der Bewegungsdaten richtungsselektiert und/oder straßen- und richtungsorientiert sein. Sie könnte aber auch geschwindigkeitsselektiert sein.

Zur Durchführung des erfindungsgemäßen Verfahrens speichert die Mobilstation für mehrere Basisstationen, die sie bei ihrer Bewegung der Reihe nach versorgen, wenigstens die zu diesen Basisstationen gehörenden Standortinformationen als Folge in einem Speicher. Die Mobilstation kann dabei selbst in der Lage sein, aus der gespeicherten Folge von Standortinformationen und/oder Zeiten und/oder Feldstärken Bewegungsdaten der Mobilstation selbst zu ermitteln, um dann entweder die Standortinformationen oder die daraus ermittelten Bewegungsdaten zur Zentralstation zu übertragen.

Zur Übertragung der gespeicherten Folge von Standortinformationen und/oder Zeiten und/oder Feldstärken bzw. der daraus ermittelten Bewegungsdaten zur Zentralstation bzw. zu einem Diensteanbieter kann die Mobilstation mit einer entsprechenden Schalteinrichtung versehen sein.

Ein Ausführungsbeispiel der Erfindung wird nachfolgend unter Bezugnahme auf die Zeichnung näher beschrieben. Es zeigen:
Fig. 1 eine Einrichtung zur Ermittlung von Bewegungsdaten über Satellitennavigation;
Fig. 2 eine Einrichtung zur Ermittlung von Bewegungsdaten unter Verwendung eines erdgebundenen Mobilfunknetzes; und
Fig. 3 eine Folge von nacheinander von einem Kraftfahrzeug durchfahrener Funkzellen.

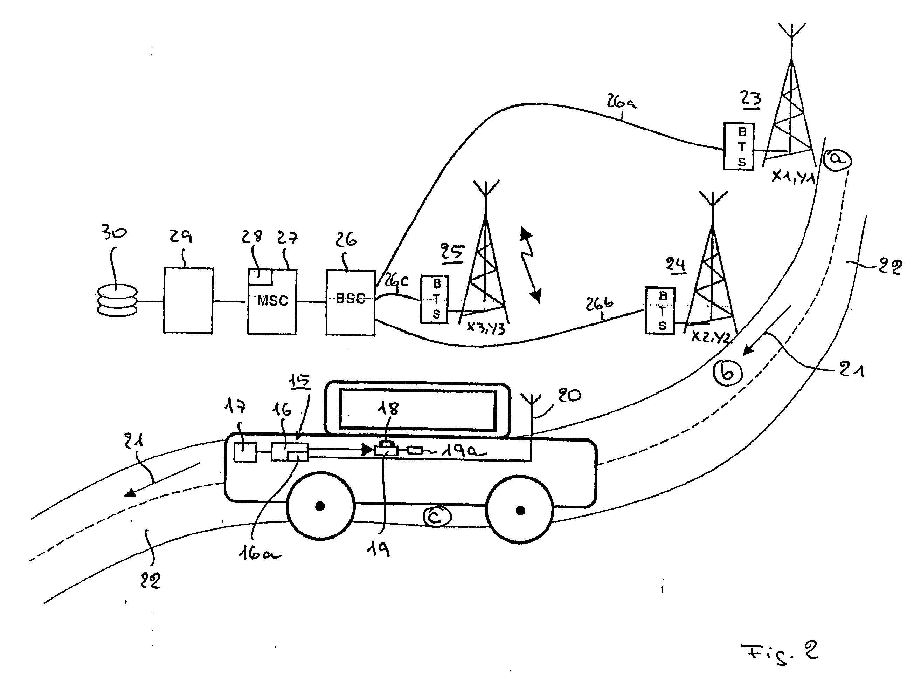

Die Figur 2 zeigt eine in einem Kraftfahrzeug 14 installierte Mobilstation 15, bestehend aus einem Autotelefon 16 mit Bewegungsdaten-Ermittlungsspeicherung 16a, mit dem ein Datenspeicher 17, ein Hörer 18 mit Auflage 19 und eine Antenne 20 verbunden sind. Ferner ist eine Umschalteinrichtung 19a mit dem Autotelefon 16 verbunden. Das Kraftfahrzeug 14 bewegt sich in Pfeilrichtung 21 entlang einer Straße 22. Die Mobilstation 15 könnte auch in Form eines mit dem Kraftfahrzeug 14 mitgeführten Handys vorliegen, könnte aber auch von einem Benutzer direkt getragen werden, der entlang der Straße 22 geht.

Zu einem in Figur 2 gezeigten Mobilfunknetz gehören mehrere und ortsfest angeordnete Basisstationen, von denen beispielsweise nur drei gezeigt sind. Es handelt sich hier um die Basisstationen 23, 24 und 25. Jeweils mehrere der Basisstationen stehen mit einer Basisstationssteuerung 26 in Verbindung, z.B. über Leitungen 26a, 26b und 26c. Die Basisstationssteuerung 26 ist mit einer Vermittlungsstelle 27 verbunden, die mehrere Basisstationssteuerungen 26 bedienen kann. Zur Vermittlungsstelle 27 gehört ein Massenspeicher 28, der unter anderem die geographischen Koordinaten der jeweiligen Basisstationen 23, 24 und 25 speichert und gegebenenfalls die Kennnummern der zu den jeweiligen Basisstationen 23, 24 und 25 gehörenden Funkzellen.

Schließlich ist mit der Vermittlungsstation 27 ein Zentralrechner 29 verbunden, der z.B. zu einem Diensteanbieter bzw. Service Provider gehört. Zu diesem Zentralrechner 29 gehört eine Datenbank 30.

Bewegt sich das Kraftfahrzeug 14 entlang der Pfeilrichtung 21 auf der Straße 22 ausgehend vom Punkt a zum Punkt b und anschließend zum Punkt c, so wird die eingeschaltete Mobilstation 15 im Kraftfahrzeug 14 nacheinander durch die Basisstationen 23, 24 und 25 versorgt. Die Mobilstation 15 steht also nacheinander mit den Basisstationen 23, 24 und 25 in Kommunikationsverbindung und empfängt dabei automatisch Informationen bezüglich der Kennnummern der jeweils gerade durchfahrenen Funkzellen bzw. bezüglich der geographischen Koordinaten der zu diesen Funkzellen gehörenden Basisstationen. Diese Kennnummern bzw. geographische Koordinaten werden dabei im Datenspeicher 17 der Mobilstation 15 als Datenfolge abgelegt. Im Datenspeicher 17 können auch Zeiten gespeichert werden, zu denen jeweils nach Durchfahren einer der Funkzellen erneut mit einer nächsten Basisstation eine hinreichend gute Funkverbindung aufgebaut worden ist. Darüber hinaus ist die Mobilstation 15 auch in der Lage, Meßungen der elektrischen Feldstärke von Empfangsignalen auszuführen, die von den jeweiligen Basisstationen gesendet werden. Auch diese Feldstärkeprofile lassen sich im Datenspeicher 17 ablegen.

Fordert der Fahrer des Kraftfahrzeugs 14 zu einem bestimmten Zeitpunkt, etwa am Ort c für ihn relevante Verkehrsinformation beim Diensteanbieter an, etwa durch Betätigung der Schalteinrichtung 19a, so werden automatisch die im Datenspeicher 17 gespeicherten Daten (Standortinformationen der Basisstationen, Zeitpunkte, Feldstärken) zum Diensteanbieter übertragen und gelangen dort in den Zentralrechner 29, wo sie zwischengespeichert werden. Der Zentralrechner 29 errechnet dann aus den zwischengespeicherten Daten Bewegungsdaten des Kraftfahrzeugs 14.

So kann er aus den Standortinformationen der zu den durchfahrenen Funkzellen gehörenden Basisstationen z.B. die Fahrtrichtung des Kraftfahrzeugs 14 bestimmen, indem er z.B. aus mehreren Ortsvektoren, die die Positionen von Basisstationen aufeinanderfolgend durchfahrener Funkzellen verbinden, einen mittleren Richtungsvektor bildet, der eine angenommene zukünftige Fahrtrichtung des Kraftfahrzeugs 14 angibt. Der Zentralrechner 29 bzw. Diensteanbieter sucht dann aus der Datenbank 30 nur für diese Richtung geltende Verkehrsinformation heraus und überträgt diese über die die Mobilstation 15 gerade versorgende Basisstation zur Mobilstation 15. Die richtungsrelevante Information kann dann dem Fahrer des Kraftfahrzeugs 14 auf geeignete Weise mitgeteilt werden, etwa akustisch oder optisch.

Anhand der aus dem Datenspeicher 17 erhaltenen Daten kann der Zentralrechner 29 des Diensteanbieters aber auch andere Bewegungsdaten des Kraftfahrzeugs 14 errechnen, etwa die tatsächliche geographische Position des Kraftfahrzeugs 14, wenn noch zusätzliche Vergleiche mit vorhandenen Straßenkarten durchgeführt werden. Auch hier kann das beretts zuvor erwähnte "Map Matching Verfahren" zum Einsatz kommen. Zudem kann durch einen Vergleich der gemessenen Feldstärke mit tatsächlich vorhanden Feldstärken gemäß einer beim Diensteanbieter gespeicherten Feldstärke-Landkarte ebenfalls besser auf die tatsächliche geographische Position des Kraftfahrzeugs 14 geschlossen werden, so daß sich auf diese Weise die Bewegungsdaten noch verfeinern lassen. Abhängig von den so erhalten Bewegungsdaten liefert dann wiederum der Diensteanbieter, gegebenenfalls auf Wunsch, entsprechende Verkehrsinformation zurück zum Kraftfahrzeug.

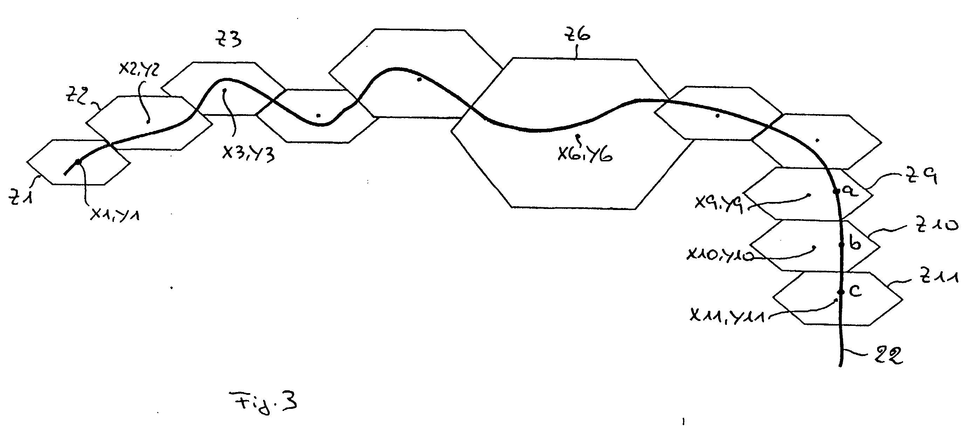

Die Figur 3 zeigt den Verlauf der Straße 22 durch mehrere Funkzellen Z1, Z2....Z11....hindurch. Die Ortskoordinaten der jeweiligen Basisstationen sind mit X1, Y1; ...; X11, Y11; ... bezeichnet. Werden z.B. an den Punkten a, b und c (vergleiche Figur 2) die Standortinformationen Z9; X9, Y9 bzw. Z10; X10, Y10 bzw. Z11; X11, Y11 jeweils zwischengespeichert, und zwar im Datenspeicher 17, und wird am Punkt c richtungsselektive Verkehrsinformation vom Fahrer des Kraftfahrzeugs 14 gewünscht, so werden diese Standortinformationen zum Diensteanbieter übertragen und dieser rechnet aus den die Punkte a und b bzw. b und c verbindenden Ortsvektoren einen mittleren Richtungsvektor aus, anhand dessen die für diese Richtung relevante Vcrkehrsinformation aus der Datenbank 30 herausgelesen und zurück zum Kraftfahrzeug 14 übertragen wird. Soll darüber hinaus die Verkchrsinformation nur für eine bestimmte Straße gewünscht sein, etwa fur die Straße 22, so könnte etwa anhand der ebenfalls zum Diensteanbieter übertragenen elektrischen Feldstärkewerte auf die Position der Straße 22 geschlossen werden, wodurch sich dann die in der Datenbank 30 gespeicherte Information noch feiner auswählen ließe.

Die Bewegungsdaten könnten allerdings auch in einer Einrichtung 16a der Mobilstation 16 ermittelt und erst dann zum Service Provider übertragen werden.

Beim Ausführungsbeispiel nach der Erfindung können auch Rückschlüsse auf die Geschwindigkeit der Mobilstation 15 entlang der Straße 22 gezogen werden, wenn man davon ausgeht, daß sich die Mobilstation 15 mit einer mittleren Geschwindigkeit bewegt, da die Größen der jeweiligen Funkzellen und die Zeiten des Eintritts der Mobilstation 15 in die jeweiligen Funkzellen bekannt sind.

## Patentansprüche

1. Verfahren zum Anfordern von Information mit Hilfe einer zu einem Mobilfunknetz gehörenden Mobilstation (15), bei dem:
- für mehrere zum Mobilfunknetz gehörende Basisstationen (23, 24, 25,...), die die Mobilstation (15) bei ihrer Bewegung der Reihe nach versorgen, wenigstens die zu den Basisstationen (23, 24, 25....) gehörenden Standortinformationen (Z; X, Y) in einem Speicher (17) der Mobilstation (15) gespeichert werden;
- eine Folge von gespeicherten Standortinformationen nur bei Bedarf zu einer Zentralstation (29) übertragen werden, wenn ein Benutzer für ihn relevante Information bei einem Diensteanbieter anfordert;
- aus den übertragenen Standortinformationen (Z; X, Y) Bewegungsdaten der Mobilstation (15) abgeleitet werden; und
- von den ermittelten Bewegungsdaten abhängige Information zur Mobilstation (15) übertragen wird.

2. Verfahren zum Anfordern von Information mit Hilfe einer zu einem Mobilfunknetz gehörenden Mobilstation (15), bei dem:
- für mehrere zum Mobilfunknetz gehörende Basisstationen (23, 24. 25....), die die Mobilstation (15) bei ihrer Bewegung der Reihe nach versorgen, wenigstens die zu den Basisstationen (23, 24, 25,...) gehörenden Standortinformationen (Z; X, Y) in einem Speicher (17) der Mobilstation (15) gespeichert werden;
- Bewegungsdaten aus einer Folge von gespeicherten Standortinformationen (Z; X, Y) nur bei Bedarf abgeleitet werden;
- die Bewegungsdaten zu einer Zentralstation (29) übertragen werden, wenn ein Benutzer für ihn relevante Information bei einem Diensteanbieter anfordert; und
- von den ermittelten Bewegungsdaten abhängige Information zur Mobilstation (15) übertragen wird.

3. Verfahren nach Anspruch 1 oder 2, **dadurch gekennzeichnet, daß** als Standortinformation die Kennnummer einer zu einer jeweiligen Basisstation (23, 24, 25,...) gehörenden Funkzelle (Z1, Z2, Z3,...) gespeichert wird.

4. Verfahren nach Anspruch 1, 2 oder 3, **dadurch gekennzeichnet, daß** als Standortinformation die geographischen Koordinaten (X, Y) einer jeweiligen Basisstation gespeichert werden.

5. Verfahren nach Anspruch 1 bis 4, **dadurch gekennzeichnet, daß** zusätzlich die Zeit, zu der die Mobilstation (15) von einer jeweiligen der Basisstationen (23, 24, 25,...) versorgt wird, im Speicher (17) der Mobilstation (15) gespeichert und gegebenenfalls zur Zentralstation (29) übertragen wird.

6. Verfahren nach einem der Ansprüche 1 bis 5, **dadurch gekennzeichnet, daß** zusätzlich eine Empfangsfeldstärke eines zwischen Mobilstation und jeweiliger Baisstation gesendeten Signals im Speicher (17) der Mobilstation (15) gespeichert und gegebenenfalls zur Zentralstation (29) übertragen wird.

7. Verfahren nach einem der Ansprüche 1 bis 6, **dadurch gekennzeichnet, daß** als Bewegungsdaten aus der gespeicherten Folge von Standortinformationen, gegebenenfalls unter Heranziehung einer Empfangsfeldstärke eines zwischen Mobilstation und Basisstation gesendeten Signals, eine Bewegungsrichtung der Mobilstation (15) ermittelt wird.

8. Verfahren nach Anspruch 7, **dadurch gekennzeichnet, daß** die gespeicherte Folge von Standortinformationen und gegebenenfalls die Empfangsfeldstärke zur Ermittlung von Bewegungsdaten darstellenden Koordinaten einer Straße (22) herangezogen werden.

9. Verfahren nach einem der Ansprüche 5 bis 8, **dadurch gekennzeichnet, daß** als Bewegungsdaten aus der gespeicherten Folge von Standortinformationen und den Zeiten, zu denen die Mobilstation (15) von den jeweiligen Basisstationen (23, 24, 25,...) versorgt worden ist, eine Geschwindigkeit der Mobilstation (15) ermittelt wird.

## Claims

1. Method of requesting information with the aid of a mobile station (15) belonging to a mobile radio network, whereby:
- for several base stations (23, 24, 25, ...) belonging to the mobile radio network which supply the mobile station (15) in series as it moves, at least the location data (Z; X, Y) belonging to the base stations (23, 24, 25, ...) is stored in a memory (17) of the mobile station (15);
- a sequence of stored location data is only transmitted to a central station (29) when required if a user requests a service provider for information relevant to him;
- movement data pertaining to the mobile station (15) is derived from the transmitted location data (Z; X, Y); and
- information is transmitted to the mobile station (15) depending on the determined movement data.

2. Method of requesting information with the aid of a mobile station (15) belonging to a mobile radio network, whereby:
- for several base stations (23, 24, 25, ...) belonging to the mobile radio network which supply the mobile station (15) in series as it moves, at least the location data (Z; X, Y) belonging to the base stations (23, 24, 25, ...) is stored in a memory (17) of the mobile station (15);
- movement data is derived from a sequence of stored location data (Z; X, Y) only if required;
- the movement data is transmitted to a central station (29) if a user requests a service provider for information relevant to him; and
- information is transmitted to the mobile station (15) depending on the determined movement data.

3. Method as claimed in claim 1 or 2, **characterised in that** the code number of a radio cell (Z1, Z2, Z3, ...) belonging to a respective base station (23, 24, 25, ...) is stored as the location data.

4. Method as claimed in claim 1, 2 or 3, **characterised in that** the geographic co-ordinates (X, Y) of a respective base station are stored as the location data.

5. Method as claimed in claims 1 to 4, **characterised in that** the time at which the mobile station (15) was supplied by one of the respective base stations (23, 24, 25, ...) is additionally stored in the memory (17) of the mobile station (15) and transmitted to the central station (29) if necessary.

6. Method as claimed in one of claims 1 to 5, **characterised in that** a received field strength of a signal transmitted between the mobile station and respective base station is additionally stored in the memory (17) of the mobile station (15) and transmitted to the central station (29) if necessary.

7. Method as claimed in one of claims 1 to 6, **characterised in that** a direction of movement of the mobile station (15) is determined as the movement data on the basis of the stored sequence of location data, optionally incorporating a received field strength of a signal transmitted between the mobile station and base station.

8. Method as claimed in claim 7, **characterised in that** the stored sequence of location data and optionally the received field strength are used as a basis for determining co-ordinates of a road (22) representing movement data.

9. Method as claimed in one of claims 5 to 8, **characterised in that** a speed of the mobile station (15) is determined as movement data on the basis of the stored sequence of location data and the times at which the mobile station (15) was supplied by the respective base stations (23, 24, 25, ...).

## Revendications

1. Procédé de demande d'information à l'aide d'une station mobile (15) appartenant à un réseau radio mobile, dans lequel :
- pour plusieurs stations de base (23, 24, 25, ...) appartenant au réseau radio mobile, qui lors de leurs déplacements alimentent la station mobile (15) l'une après l'autre, au moins les informations de position (Z; X, Y) appartenant aux stations de base (23, 24, 25, ...) sont stockées dans une mémoire (17) de la station mobile (15);
- une suite d'informations de position mémorisées n'est transmise qu'en cas de besoin à une station centrale (29), lorsqu'un utilisateur demande de l'information, importante pour elle, auprès d'un offreur de services.
- des données de localisation de la station mobile (15) sont dérivées des informations de position (Z; X, Y) transmises; et
- une information, dépendant des données de localisation déterminées, est transmise à la station mobile (15).

2. Procédé de demande d'information à l'aide d'une station mobile (15) appartenant à un réseau radio mobile, dans lequel :
- pour plusieurs stations de base (23, 24, 25, ...) appartenant au réseau radio mobile, qui lors de leurs déplacements alimentent la station mobile (15) l'une après l'autre, au moins les informations de position (Z; X, Y) appartenant aux stations de base (23, 24, 25, ...) sont stockées dans une mémoire (17) de la station mobile (15);
- des données de localisation, issues d'une suite d'informations de position (Z; X, Y) stockées, ne sont dérivées qu'en cas de besoin;
- les données de localisation sont transmises à une station centrale (29), lorsqu'un utilisateur demande une information, importante pour lui, auprès d'un offreur de services; et
- une information dépendant des données de localisation déterminées est transmise à la station mobile (15).

3. Procédé selon la revendication 1 ou 2, **caractérisé en ce qu'**est stockée, comme information de position, le numéro d'identification d'une cellule radio (Z1, Z2, Z3, ...) appartenant à une station de base (23, 24, 25, ...) respective.

4. Procédé selon la revendication 1, 2 ou 3, **caractérisé en ce que** l'on stocke, comme information de position, les coordonnées géographiques (X, Y) d'une station de base respective.

5. Procédé selon la revendication 1 à 4, **caractérisé en ce que**, en plus, le moment auquel la station mobile (15) est alimentée par l'une respective des stations de base (23, 24, 25, ...) est stockée dans la mémoire (17) de la station mobile (15) et, le cas échéant, transmis à la station centrale (29).

6. Procédé selon l'une des revendications 1 à 5, **caractérisé en ce que**, en plus, une intensité de champ de réception d'un signal, envoyé entre la station mobile et la station de base respective, est stockée dans la mémoire (17) de la station mobile (15) et, le cas échéant, transmise à la station centrale (29).

7. Procédé selon l'une des revendications 1 à 6, **caractérisé en ce que**, en tant que donné de localisation, à partir de la succession d'informations de position, le cas échéant en exploitant une intensité de champ de réception d'un signal envoyé entre la station mobile et la station de base, on détermine une direction de déplacement de la station mobile (15).

8. Procédé selon la revendication 7, **caractérisé en ce que** la succession stockée d'informations de position, le cas échéant l'intensité de champ de réception, sont exploitées pour déterminer des coordonnées, constituant des données de localisation, d'une route (22).

9. Procédé selon l'une des revendications 5 à 8, **caractérisé en ce que**, à partir de la succession stockée d'informations de position et des moments auxquels la station mobile (15) est alimentée par différentes stations de base (23, 24, 25, ...), on détermine une vitesse de la station mobile (15) en tant que données de localisation.
